# EUROPEAN PATENT APPLICATION

(11) **EP 2 819 416 A1**
(43) Date of publication of application: **31.12.2014**
(21) Application number: 14173815.3
(22) Date of filing: 25.06.2014
(51) Int. Cl.: H04N 21/218, H04N 21/258, H04N 21/2665, H04N 21/2743, H04N 21/414, H04N 21/4223, H04N 21/45, H04N 21/4788

(54) **Media sharing**

(30) Priority: 28.06.2013 GB 201311651
(71) Applicant: F-Secure Corporation, 00181 Helsinki (FI)
(72) Inventor: Kangas, Santeri, 00181 Helsinki (FI); Tulokas, Jyrki, 00181 Helsinki (FI)
(74) Representative: Lind, Robert

(57) **Abstract**

A method of sharing media between end users. The method comprises defining an event for which media is to be shared, registering event data at end user devices, said event data including one or more event definitions, and capturing media at the end user devices and, at each device, identifying captured media that matches the event definition(s). The identified captured media is then uploaded to a shared multimedia storage and the media made available to end users.

## Description

### Technical Field

The present invention relates to media sharing using end user devices. It is applicable in particular, though not necessarily, to the sharing of media captured by a plurality of Internet-connected smartphones.

### Background

People are generally sociable and like to gather at social events, both large and small. These events may be large social gatherings (such as parties or festivals), turning points in an individual's life (such as graduation, religious ceremonies, or marriages), or events which people will want to remember and return to (such as concerts, sporting events, or achievements like climbing a mountain). Both the organisers of the event and those attending will want to preserve their memories of the event. With the advent of smartphones, many people now carry connected devices that are capable of capturing and transmitting different kinds of event data including media such as images and video.

Those attending and organising the events will often want to share recorded media with others, and see the media that others have generated. Currently, this is achieved by one-to-one sharing (e.g. via cloud sharing, email, or in person) or by social media (such as an event page on Facebook™, or a Flickr™ group for the event). However, this requires significant proactive effort on the part of those creating the media, and significant time may pass before the media is uploaded onto the social network making it less topical.

### Summary

It is an object of the present invention to facilitate the sharing of captured media amongst a group of users and, potentially, to automate the process to some degree.

According to a first aspect of the present invention there is provided a method of sharing media between end users. The method comprises defining an event for which media is to be shared, registering event data at end user devices, said event data including one or more event definitions, and capturing media at the end user devices and, at each device, identifying captured media that matches the event definition(s). The identified captured media is then uploaded to a shared multimedia storage and the media made available to end users.

By effectively predefining the event data, an end user device is able to identify captured data that should be uploaded to the shared multimedia storage. This facilitates automation of the uploading process, potentially removing the need for the device user's participation. The invention makes the sharing process easier, and potentially improves the relevance of the captured media (to the event).

The step of registering event data at end user devices may comprise sending said event data to the end user devices from a media sharing site. The event definitions may include event time and/or location definitions for the event, and said step of identifying captured media that matches the event definition(s) may comprise determining whether the media has been captured during said event time definition and/or within said event location definition. In the case that said event definitions include an event time definition, the event time definition may comprise event start and end times. In the case that said event definitions include an event location definition, the event location definition may comprise a specified geolocation point and a radius or a set of geolocation points.

The method may comprise automatically detecting the capture of media at a user device in order to perform said step of identifying captured media that matches the event definition(s). The step of uploading may carried out automatically in response to the identification of captured media that matches the event definition(s).

The step of registering event data at an end user device may comprises one or more of receiving an invitation to the event, detecting input of an event identifier, and analysing an optically machine readable label.

The event definitions may include one or more media type definitions. The step of defining an event for which media is to be shared may comprise receiving said event data as input at an end user device, and sending the event data to said media sharing site. The step of making the media available to end users may comprise publishing the media in an online album.

According to a second aspect of the present invention there is provided a user device comprising a wireless data transceiver, a media recorder for capturing media, a positioning unit for determining a current position of the device, and a timing unit for determining a current time. The user device further comprises an event management unit configured to identify an event, register event data including one or more event definitions, detect the capture of media by the media recorder that matches said event definition(s), and cause the transceiver to upload the relevant media to the network hosted media sharing site.

The event management unit may be configured to automatically detect the capture of media by the media recorder that matches said event definition(s) and thereafter to automatically upload the relevant media to the network hosted media sharing site.

The media recorder may comprise any one or more of a camera, a video camera, a microphone; a device movement sensor, and a positioning unit.

The event management unit may be configured to identify the event by analysing an image of a machine readable label captured by the media recorder.

According to a third aspect of the present invention there is provided a computer program comprising computer readable code which, when run on an end user device, causes the device to, register event data, said event data including one or more event definitions, identify captured media that matches the event definition(s), and upload the identified captured media to a media sharing site.

The event definition(s) may comprise event timing and/or location definitions, said code, when run, further causing the device to identify captured media that matches the event definition(s) by matching the location and/or time at which the media is captured with said definition(s).

The code, when run, may further causes the device to automatically upload identified captured media to said media sharing site.

According to a fourth aspect of the present invention there is provided a computer program product comprising a non-transitory computer readable medium and a computer program according to the above third aspect of the invention, wherein the computer program is stored on the computer readable medium.

### Description of the Drawings

Figure 1 illustrates schematically an event system comprising an exemplary user App and an event site;
Figure 2 illustrates schematically a user device configured to cooperate with an event site; and
Figure 3 is a flow diagram illustrating a procedure for sharing media, captured at user devices, via an event site.

### Detailed Description

An apparatus and method are presented here that provide a seamless way for smartphone users, or users of other Internet-connected media creation devices (such as WiFi enabled cameras), to connect their devices into one shared event URL on an event site. The event URL points to a file object storage (hereafter "event multimedia storage"). The event multimedia storage is created for a specific event, with a defined time and/or location. Any media generated by those at the event using an application embodying the present approach will be immediately uploaded and/or streamed to the event multimedia storage. The immediate upload may be limited only to content captured from location and/or within the time of the event. This enables connected media creation devices to share to the same event multimedia storage in real time. This approach aims to provide a seamless way to connect user capturing devices to one multimedia event storage, and may make use of existing storage solutions such as F-Secure Content Cloud Platform.

According to the present approach, connected devices such as smartphones are configured to register event data. For a given event, this would typically be a time window marking the start and end times of the event, a location, an address (e.g. an IP address and/or URL) for the event multimedia storage. The location could be a geographical coordinate set and a location radius. Certain media may be specified for the event, e.g. images, voice recordings and video. A user device is configured to recognise when relevant media has been captured within the specified location and time window. Such media may be immediately and automatically uploaded to the event multimedia storage.

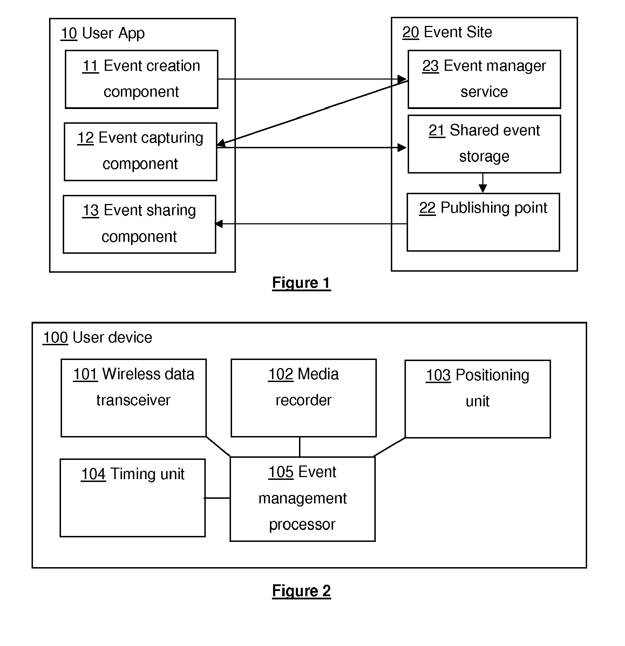

The event system uses four primary components, as shown in Figure 1:
1. An event creation component 11 allows a user (the event "organiser") to create events, and to invite other users to join the event. This component may be software running on a device or an Internet-based web application.
2. An event capturing component 12 captures media at the event, and uploads it to the shared event multimedia storage. The physical apparatus for this component (e.g. the camera, microphone, etc) is always located in the media capturing device. The software may be a local application, or a mix of local applications and Internet-based web applications.
3. The shared event multimedia storage 21 stores the media captured at the event. The event multimedia storage may also analyse the media, e.g. to exclude certain types of media, or to perform facial recognition to identify users at the event.
4. An event sharing component 13 allows users to view the media on the shared event publishing point 22. The sharing component may be a local application on a smartphone, computer, or other Internet enabled device, or it may be a web application or website.

The event creation 11, event capturing 12, and event sharing 13 components may be combined into a single application 10, or they may be implemented as separate applications. A typical implementation might involve the installation and use of a smartphone Application or "App" which, when activated, allows a user to organise and join events (involving viewing ongoing or future events that the user is eligible to join), and to configure user setting such as allowed media. The shared event storage 21, publishing point 22, and an event manager service 23 may be integrated into a single event site 20. This may represent physical storage on the same server, or being accessed under a single domain name or subdomain.

As well as the components identified above, the approach relies upon other standard components implemented at a typical end user device (as shown schematically in Figure 2). These components include a position determination component 103 such as a GPS component that is able to provide current location information to the event capturing component, a reliable clock 104 component that provides timing information to the event capturing component, and a wireless data transceiver 101 to allow communication with the event site functions. The event capturing component consists of a media recorder 102 and an event management processor 105.

It will be appreciated that implementation of this proposal will require some network server(s), typically a Representational State Transfer (RESTfull) web service coupled to the Internet that are capable of receiving and hosting uploaded media. In some embodiments, these may be existing servers, with novel functionality being implemented solely in the user devices, i.e. the user devices police access to an event site, possibly using some peer-to-peer management processes. In other embodiments the servers are operated by or on behalf of a service provider that distributes the associated smartphone apps, and polices access to the event sharing service.

An event may be either public or private. If the event is public, there is no need for an event site to authenticate users and/or content; any user in the right place at the right time may select to have all relevant media uploaded to the event site for the duration of the event. In the case of a private event on the other hand, users may be required to register and authenticate themselves to the event site. Uploaded content may also be authenticated at the event site before being shared, e.g. by authenticating timestamps and location stamps sent together with the uploaded media.

An event may be pre-organised or created on-the-fly. In the case of a pre-organised event, the event creator specifies the event location (which may be global, e.g. for an awareness campaign), event time, and privacy level (public or private). The privacy level may be indicated by a software "flag". The organiser may then invite other people to the event. This may be done via an application running on the organiser's media creation device (e.g. smartphone App), or on a management program run on some other device (e.g. a personal computer). For an on-the-fly event, the event can be created on a media creation device running the App. The start time of the event is then the time that the event is created, and the location is defined as the location of the media creation device. The end time may be configurable, as may the exact location of the event (so long as it includes the current location of the media creation device).

As a further option, an on-the-fly event may be configured automatically when a user of the App generates media under certain circumstances, e.g. using a media creation functionality built into the App, or when a user of the App shares content with another user, or another user shares content with a user of the App. The event parameters may be automatically determined based on the properties of the content which prompted the creation of the event. For example, if a user shares a photograph with another user on a social media platform, the App may detect this sharing and create an event with a start time set to a certain amount of time before the photograph was taken, an end time set to a certain amount of time after the photograph was taken, and a location set to a certain radius around where the photograph was taken. These parameters may be editable after the event is created, in order to ensure that the event data matches the real-world event. Invites to the event may be sent to the users which the content was shared with, and to any users "tagged" in the content shared. Additional media content generated which matches the parameters of the event will then be accessible to those users.

Invitations to an event may be generated, for example, by a) providing a unique event ID (e.g. an alphanumeric event ID), b) automatically inviting any users of the application who are within the event area during the event, or c) using facial recognition to identify users of the application who are captured in photographs or videos taken by people already participating in the event. The event ID may be distributed by email, send directly to capturing component as notification through backend notification service, by an event URL, or by a computer readable visual code such as a QR code. Alternatively, the event can be identified by a cryptographic signed unique identifier string, which may be created from the event ID, and this string may be presented in the event URL or QR code. The user inputs the event ID, visits the URL, or captures the computer readable visual code using the relevant App, and is then registered to the event. In the case of facial recognition, this may be performed in the shared multimedia database. An organiser may have to confirm the invitation before it is sent out to the user, and/or the user may have to accept the invitation before being registered to the event.

Event invitations may be processed directly by the App itself, e.g. the App may receive an event invitation and show a notification to the user inviting them to accept the invitation. When a user enters the location of an ongoing public event, or an ongoing private event which the user has previously joined, the App may show a notification inviting the user to start sharing content with the event. For events which the user has joined, the App may show a notification at the start time of the event regardless of whether the user is in the correct location, but the user may not be invited to share media to the event until they are in the correct location.

The App may include functionality to allow a user to search for ongoing events, or events within a specified timeframe, which are occurring near the use or near a specified position. For example, a user may search for ongoing events near their current position to find events to participate in at that time, or a user planning a holiday may search for events near their destination at the time of their holiday. Events may have additional metadata defining e.g. the type of event (such as a party, commercial event, sports event, etc), and the target audience, and the App may allow users to filter event search results based on this metadata.

Once a user has accepted an event invitation, and is in the correct location during the event, all media of the selected types recorded by the user's device is uploaded to the shared multimedia storage, e.g. using the previously received upload event multimedia storage address. The types of media to be uploaded may be selected by the user and/or the event organiser. The media may be uploaded by streaming, bloc transfers or any other suitable transmission protocol. The user device will typically make use of a wireless data connection such as is facilitated by WiFi, 3G, or 4G networks. If the media creation device does not have an active connection to the Internet, then the media may be cached until such a connection becomes available. The user may be invited to confirm the upload of each item of media. The App detaches from the event when the media creation device leaves the event area, or when the event end time is reached. After the App detaches, no further media is uploaded.

If a user receives an invite to an event which is currently ongoing, or to an event in the past, the App may examine media content on the user's device to determine if the content matches the event definitions. If so, then the content may be uploaded to the event, or the user may be prompted to upload the content. This may be determined from metadata of the saved content, e.g. EXIF data of photographs. Alternatively, the App may log all content creation performed on the user device, and maintain a database of content which lists the file location of the content, the time the content was captured, and the location where the content was captured. This database may then be searched to identify media which matches event definitions if an invite is received for an event which is currently ongoing or in the past.

The App may monitor the time and location of the media capturing device, and activate when the time and location match the time and location for an event to which the device is registered. When the App is active, all media captured by the media capturing device will be uploaded to the shared multimedia storage for that event. The App continues to monitor the time and location, and when the media capturing device moves out of the event area, or the event end time is reached, the App deactivates and newly captured media is no longer sent to the shared multimedia storage.

Alternatively, the App may determine the time and location of the media capturing device whenever media is created, and compare the time and location to the time and location information of the events to which the device is registered. The media is then uploaded to any events for which the time and location where the media was created corresponds to the time and location for the event.

The App may detect that media has been created by hooking an API call which is activated when media is created, e.g. a notification that the camera has taken a picture. This API call may include time or location information for the media, or the App may query other functions in the media creation device to determine the time and location (e.g. a clock and a GPS positioning unit). For example, the App may set up a MediaCreationListener which activates in response to a MediaCreationEvent notification generated by the media creation component (e.g. the camera). Alternatively, the App may include media creation functionality (e.g. a camera or voice recorder sub-application), and only media captured using the App may be uploaded.

The App may also retrieve content data from other social media platforms, e.g. Facebook TM . The App may make use of an application programing interface, API, for the other social media platform in order to retrieve media content uploaded by the user of the app, or the user's social network contacts, and to determine whether this media corresponds to the event definitions. If the API for the other social media platform allows, the metadata for the media content (e.g. EXIF data) may be retrieved rather than the actual content, in order to save on bandwidth. In order to narrow down the media content to be searched, the App may only examine content in which the user or another event participant has been "tagged". The content itself may be transferred to the shared event space, or a link to the content may be added to the shared event space. In this way, the media sharing service can gather media content relating to the event including that generated by users who do not use the media sharing service.

Examples of media captured at an event may include photographs, audio or video recordings, the locations of the participants (e.g. through GPS tracking, mobile network base station location or WLAN station physical address location), or the movement of the participants (e.g. obtained from accelerometers or changes in position information). The user and/or the event organiser may be able to select which types of media will be uploaded to the shared event site. Access to the shared multimedia storage may be public, or it may be limited to only those who have participated in the event. Access may be time-limited, e.g. only providing streams during the event.

The location of an event may be defined as a street address, as a radius around a geolocation point (latitude/longitude and altitude), or as the area enclosed by the polygon formed from a series of geolocation points.

The media capturing device may be connected to multiple events simultaneously (e.g. a global event and a local event). In this case the app may upload content to all shared multimedia storages associated with events to which it is connected, or the user may be prompted to select the event to which content should be uploaded.

This system may also be used for personal security purposes. A security system may use a set of unattended capturing devices, as well as user-operated capturing devices. Each of these devices is registered to an event located on the property to be monitored, and the time of the event may be set to, for example, the duration of a security contract, or a storage time before archiving the security information. This allows the easy combination of multiple security feeds (e.g. fixed cameras, audio recorders, and devices used by security staff) into a single storage location. In the case of devices used by security staff, only the media captured inside the security location will be added to the event site, allowing the same device to be used at multiple locations without the need for it to be manually reconfigured when changing location. The multimedia storage may be paired with a home (or building) automation system.

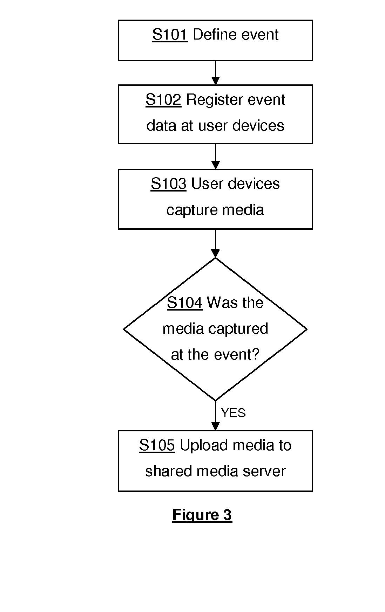

A flowchart of an example method is shown in Figure 3. At step S101, the event is defined, e.g. by the event creation component. At step S102 the event data is registered at user devices. This may be in response to an invitation received from the event site, or comprise looking up the information from the event site using a unique identifier. At step S103, the user device captures media. The App then determines whether the media was captured at the event (step S104), and if so, then it is uploaded to the shared multimedia storage (step S105).

It will be appreciated by the person of skill in the art that various modifications may be made to the above described embodiments without departing from the scope of the present invention.

## Claims

1. A method of sharing media between end users, the method comprising:
defining an event for which media is to be shared;
registering event data at end user devices, said event data including one or more event definitions;
capturing media at the end user devices and, at each device, identifying captured media that matches the event definition(s); and
uploading the identified captured media to a shared multimedia storage and making the media available to end users.

2. A method according to claim 1, wherein said step of registering event data at end user devices comprises sending said event data to the end user devices from a media sharing site.

3. A method according to claim 1 or 2, wherein said event definitions include event time and/or location definitions for the event, and said step of identifying captured media that matches the event definition(s) comprises determining whether the media has been captured during said event time definition and/or within said event location definition.

4. A method according to claim 3, wherein, in the case that said event definitions include an event location definition, the event location definition comprises a a set of geolocation points or both a specified geolocation point and a radius.

5. A method according to any one of the preceding claims and comprising automatically detecting the capture of media at a user device in order to perform said step of identifying captured media that matches the event definition(s) and/orwherein said step of uploading is carried out automatically in response to the identification of captured media that matches the event definition(s).

6. A method according to any of the preceding claims, wherein the captured media comprises one or more of photographs, video, audio, physical movement data and location data.

7. A method according to any one of the preceding claims, wherein said step of registering event data at an end user device comprises:
receiving an invitation to the event;
detecting input of an event identifier; or
analysing an optically machine readable label.

8. A method according to any one of the preceding claims, wherein said event definitions include one or more media type definitions.

9. A method according to any one of the preceding claims, wherein said step of defining an event for which media is to be shared comprises receiving said event data as input at an end user device, and sending the event data to said media sharing site.

10. A user device comprising:
a wireless data transceiver;
a media recorder for capturing media;
a positioning unit for determining a current position of the device;
a timing unit for determining a current time;
an event management unit configured to
identify an event,
register event data including one or more event definitions,
detect the capture of media by the media recorder that matches said event definition(s),
cause the transceiver to upload the relevant media to the network hosted media sharing site.

11. A user device according to claim 10, wherein the event management unit is configured to automatically detect the capture of media by the media recorder that matches said event definition(s) and thereafter to automatically upload the relevant media to the network hosted media sharing site.

12. A user device according to claim 10 or 11, wherein the media recorder comprises any one or more of:
a camera;
a video camera;
a microphone;
a device movement sensor;
the positioning unit.

13. A computer program comprising computer readable code which, when run on an end user device, causes the device to:
register event data, said event data including one or more event definitions;
identify captured media that matches the event definition(s); and
upload the identified captured media to a media sharing site.

14. A computer program according to claim 13, wherein said event definition(s) comprise event timing and/or location definitions, said code, when run, further causing the device to identify captured media that matches the event definition(s) by matching the location and/or time at which the media is captured with said definition(s).

15. A computer program product comprising a non-transitory computer readable medium and a computer program according to any one of claims 13 or 14, wherein the computer program is stored on the computer readable medium.
